# FASCICULE DE BREVET EUROPEEN

(11) **EP 0 560 670 B1**
(45) Date de publication et mention de la délivrance du brevet: **11.10.1995**
(21) Numéro de dépôt: 93400605.7
(22) Date de dépôt: 09.03.1993
(51) Int. Cl.: B62K 5/04

(54) **Dispositif de stabilisation pour véhicule**
Stabilisatoreinrichtung für Fahrzeuge
Vehicle stabilisation device

(30) Priorité: 10.03.1992 FR 9202822
(43) Date de publication de la demande: 15.09.1993
(73) Titulaire: Patin, Pierre, F-75005 Paris (FR)
(72) Inventeur: Patin, Pierre, F-75005 Paris (FR)
(74) Mandataire: Phélip, Bruno

(56) Documents cités:
- EP-A- 0 369 863
- DE-A- 2 922 691

## Description

Il a été recherché, depuis l'invention du véhicule à deux roues motorisé, différents moyens de rendre stable à l'arrêt ce type de véhicule, qui présente de grands avantages en circulation et en stationnement grâce à son faible encombrement. En effet, cette possibilité permettrait de le clore, et de lui donner le même confort et la même sécurité qu'un véhicule à trois ou quatre roues.

L'état de la technique le plus récent est représenté par les brevets FR-A-2 600 612 et EP-A-0 369 863 du même inventeur, W. Pierre PATIN, brevets basés sur le principe suivant : le véhicule comporte deux éléments, châssis et caisse, la caisse étant articulée sur le châssis de façon telle que lorsque l'ensemble du véhicule s'écarte de la verticale apparente -résultante de la pesanteur et de la force centrifuge-, une liaison entre le châssis et la caisse est créée qui tend à provoquer la montée du centre de gravité de la caisse par rapport au châssis, entraînant également un déplacement vers le haut du centre de gravité de l'ensemble. Un tel mouvement qui consomme de l'énergie est évidemment impossible sans apport d'énergie extérieure, ce qui entraîne la stabilité du véhicule.

L'objet de l'invention est de perfectionner les véhicules du type décrit dans le brevet EP-A-0 369 863 par application d'un principe impliquant toujours que la chute du véhicule est rendue impossible parce qu'elle entraînerait son soulèvement.

Conformément à l'invention, un tel véhicule inclinable à chassis en deux parties comprend :
- une partie primaire d'appui roulant sur le sol centrée sur un plan médian normalement vertical et associée à au moins deux trains porteurs, respectivement avant et arrière, l'un des trains portant deux roues écartées transversalement et l'autre train portant au moins une troisième roue,
- une partie secondaire suspendue à la partie primaire et pouvant s'incliner, sous les effets conjugués de la pesanteur et de la force centrifuge, par rapport à la partie primaire en tournant autour d'un axe de suspension parallèle au sol et aux plans médians de la partie primaire et de la partie secondaire,
- un système à parallélogramme déformable associé au train porteur à deux roues et permettant l'inclinaison de la partie primaire et des deux roues par rapport au sol, comprenant deux montants latéraux parallèles au plan médian et articulés à leurs extrémités sur deux balanciers parallèles articulés eux-mêmes sur la partie primaire, respectivement autour de deux axes superposés placés dans le plan médian et parallèles au sol, les axes des deux roues étant montés respectivement sur lesdits montants perpendiculairement au plan médian,
- une traverse suspendue à la partie primaire autour d'un axe de suspension parallèle à l'axe de suspension de la partie secondaire,
- deux chariots de blocage portés respectivement par les deux extrémités de la traverse et montés coulissants le long de celle-ci, chacun par l'intermédiaire d'une liaison glissante permettant le maintien de l'orientation de la traverse par rapport au chariot correspondant,
- les deux chariots étant montés coulissants, respectivement, sur les deux montants latéraux du parallélogramme et munis chacun d'un moyen de blocage de son coulissement le long du montant latéral correspondant dans un sens de coulissement correspondant à un éloignement de l'axe de suspension de la traverse par rapport au plan médian de la partie primaire, le coulissement restant libre dans l'autre sens correspondant à un rapprochement dudit axe de suspension vers ledit plan médian,
- l'axe de suspension de la traverse sur la partie primaire étant déterminé virtuellement par un système de deux bielles articulées, respectivement, par leurs extrémités inférieures sur la traverse, et par leurs extrémités supérieures, sur la partie primaire, les points d'articulation inférieure sur la traverse étant écartés symétriquement de part et d'autre du plan médian de la partie secondaire, et les points d'articulation supérieurs étant écartés symétriquement de part et d'autre du plan médian de la partie primaire et les bielles étant orientées de façon à converger vers le haut en un point constituant un centre instantané de rotation et placé sur ledit axe de suspension virtuel de la traverse,
- ladite traverse étant solidaire angulairement de la partie secondaire et cette dernière s'inclinant librement avec la partie primaire tant que leurs plans médians coïncident sensiblement et la partie secondaire prenant appui sur la partie primaire par l'intermédiaire de la traverse, des chariots et des montants du parallélogramme lorsque son plan médian s'écarte, aux jeux près, du plan médian de la partie primaire dans le sens où le véhicule tend à tomber.

La partie secondaire, qui peut être réduite au siège du conducteur, est suspendue à la partie primaire par des biellettes analogues aux biellettes de suspension de la traverse, celle-ci pouvant être rendue solidaire de la partie secondaire lorsque le train roulant stabilisateur est le train arrière ou un train intermédiaire.

Le dispositif de stabilisation peut être conçu soit pour que les moyens de blocage du coulissement des chariots interdisent la descente vers le bas, le long du montant latéral correspondant, du chariot se trouvant du côté vers lequel le plan médian de la partie secondaire s'écarte de celui de la partie primaire, et permettent la descente vers le bas du chariot opposé, soit pour que les moyens de blocage du coulissement des chariots interdisent la remontée vers le haut, le long du montant latéral correspondant, du chariot se trouvant du côté opposé à celui vers lequel le plan médian de la partie secondaire s'écarte de celui de la partie primaire et permettent la montée vers le haut du chariot opposé.

Il va de soi qu'un véhicule terrestre à deux roues n'étant pas stable naturellement, un véhicule autostable comportera au minimum trois roues, soit deux à l'arrière et une à l'avant, soit deux à l'avant et une à l'arrière. Une solution à deux roues avant et deux roues arrière, et une solution à deux roues médianes, une roue avant et une roue arrière, sont évidemment envisageables.

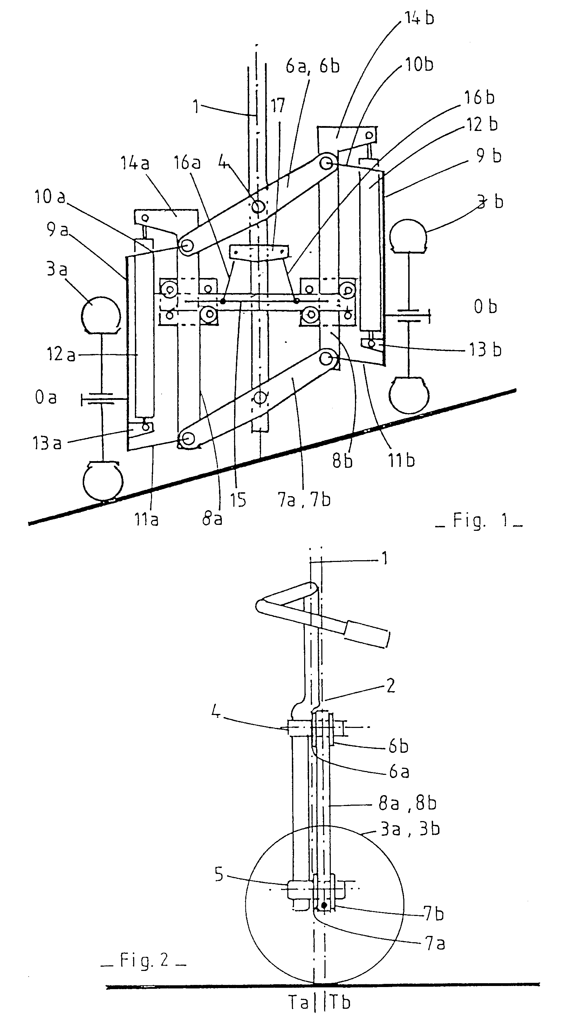

Chaque système stabilisateur à deux roues (avant ou arrière ou médian) est équipé de la même façon pour assurer la stabilité. A titre d'exemple non limitatif, les figures 1 à 6 décrivent le système de stabilisation d'un "diabolo" avant, c'est-à-dire d'un système articulé de deux roues montées en parallèle de façon telle que lorsque le véhicule est en route, cet ensemble est équivalent à une roue unique située dans le plan axial du véhicule en alignement.

La figure 1 représente schématiquement cet ensemble articulé vu à l'avant.

La figure 2 est une vue de côté schématique.

La figure 3 est une perspective du dispositif de blocage (chariot et barre de blocage).

La figure 4 représente le système de blocage en position libre.

La figure 5 représente le système de blocage en position de blocage.

la figure 6 représente la suspension du siège du conducteur et sa liaison avec la barre de blocage.

Sur les figures 1 et 2, 1 est l'axe de la colonne de direction ; le véhicule étant vertical à l'arrêt, cet axe est vertical et placé dans le plan moyen vertical du véhicule ; 2 est la trace sur le plan axial du véhicule du plan moyen du dispositif articulé représenté sur la figure 1 ; ce plan moyen est parallèle à l'axe 1 et passe par les axes Oa et Ob des deux roues 3a et 3b et par les points de contact Ta, Tb des roues avec le sol. Pour assurer la stabilité en ligne droite, il est un peu en arrière de l'axe 1. Toutefois, le centre de gravité de l'ensemble rotatif sera, de préférence, en avant de ce même axe, ce qui permet une orientation par simple inclinaison du véhicule.

La colonne de direction 1 porte deux tétons 4, 5 sur lesquels sont articulés les balanciers 6a, 6b, 7a, 7b qui constituent avec les montants 8a, 8b un parallélogramme articulé. Chaque axe de roue 0a, 0b est fixé à un plateau 9a, 9b articulé sur les extrémités du montant correspondant 8a, 8b par des biellettes 10a, 10b, 11a, 11b, de façon à constituer d'une façon connue, un dispositif en forme de parallélogramme ou de trapèze assurant les mouvements de la suspension de chaque roue ; ces mouvements sont contrôlés par des ressortsamortisseurs 12a, 12b articulés, d'une part sur un ergot 13a, 13b solidaire du plateau, d'autre part sur une console 14a, 14b solidaire du montant.

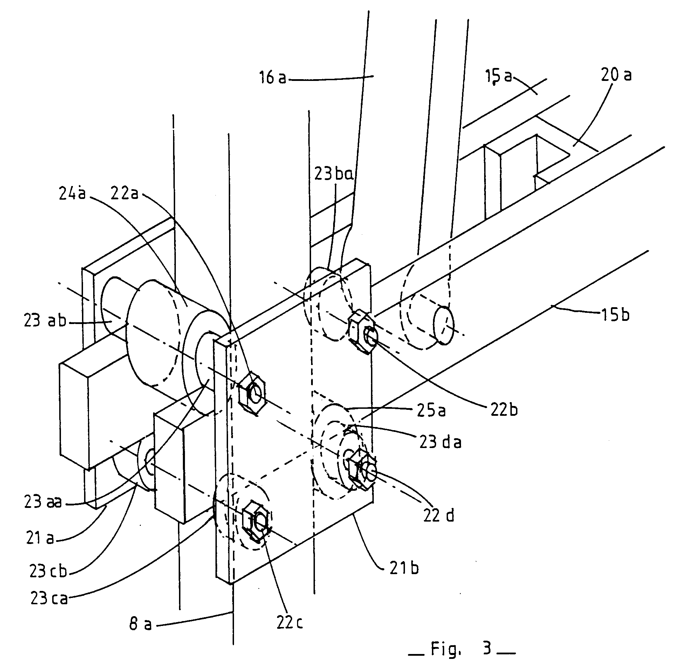

Une traverse de blocage 15 est suspendue par deux biellettes 16a, 16b à une console double 17 portée par la colonne de direction. Cette traverse porte deux chariots de blocage 18a, 18b dont le fonctionnement va maintenant être étudié sur les figures 3, 4 et 5.

La figure 1 est une vue en perspective de l'élément de blocage constitué par la traverse suspendue 15, le chariot 18a et le montant 8a. Comme il sera exposé plus loin, le mouvement de la traverse 15 sera avantageusement contrôlé par le siège du conducteur suspendu de manière analogue à cette traverse 15. Toutefois, pour l'explication du fonctionnement du système, il suffit de considérer la traverse 15 comme soumise uniquement aux forces d'inertie (pesanteur et force centrifuge).

Comme il a été dit précédemment, la traverse de blocage 15, constituée de deux plats 15, 15b, assemblés rigidement par des entretoises 20a, 20b, est suspendue à la console 17 par des biellettes obliques 16a, 16b.

Un chariot de blocage 18a est constitué de deux plaques 21a, 21b assemblées par des entretoises cylindriques 22a, 22b, 22c, 22d qui servent également d'axes à des roulements 23aa, 23ba, 23bb, 23ca, 23cb, 23da, 23db et à des roues libres 24a et 25a.

Les roulements 23 maintiennent le chariot en coulissement rigoureux sur la traverse 15, les plaques 21a et 21b coulissant à frottement doux le long de cette traverse.

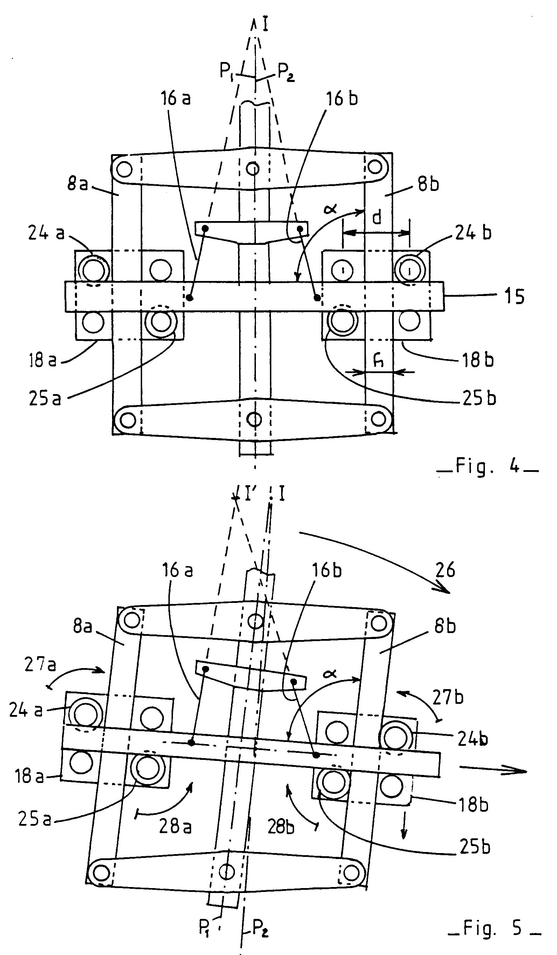

Lorsque le système est en position d'équilibre (figure 4) il existe un jeu entre les roues libres et les montants. Le jeu total à l'intérieur d'un chariot, égal à la différence d-h entre la distance de qui sépare deux entretoises de même niveau et l'épaisseur h du montant, permet un coulissement sans frottement de son montant quand celui-ci se déplace, par déformation du parallélogramme, par rapport à la traverse 15. On notera qu'un petit mouvement de cette traverse s'effectue, comme il est bien connu, autour du centre instantané de rotation I placé au point de rencontre des prolongements des biellettes 16a, 16b.

Supposons maintenant quel le système tend à tomber, du fait de la pesanteur ou de la force centrifuge, dans le sens indiqué par la flèche 26 (figure 5). La traverse 15 se déplace vers la droite sous l'action de ces forces et son centre instantané de rotation vers la gauche en I'. La traverse 15 subit donc à la fois une translation vers la droite et une rotation en sens inverse de la flèche 26, l'angle x entre la traverse 15 et le montant 8b qui était droit, devient obtus, et les roues libres 24b et 25b viennent s'appuyer sur le montant 8b, le chariot 18b tendant à descendre le long de ce montant.

Or, les roues libres 24b, 25b sont montées de façon à pouvoir tourner dans le sens des flèches 27b, 28b, mais non en sens inverse. Lorsqu'elles viennent s'appuyer sur le montant 8b, elles arrêtent le mouvement du chariot 18b et le solidarisent du montant. Si la chute se poursuivait, la rotation du montant entraînant celle de la traverse amènerait celle-ci à soulever l'ensemble du véhicule par l'intermédiaire des biellettes 16a, 16b. Cette action, en exerçant un couple sur les roues libres 24b, 25b tend évidemment à augmenter le blocage et la chute est arrêtée. A contrario, tout mouvement de retour à l'équilibre est rendu possible par une roue-libre tournant alors dans le sens normal.

On voit également que, du côté gauche de la figure, les jeux vont augmenter. Si, au contraire, la traverse de blocage 15 est repoussée vers la gauche, par exemple par la force centrifuge, l'inclinaison serait autorisée, aussi bien par le chariot 18b qui prendra le jeu maximum que par le chariot 18a, dont les roues-libres tourneraient dans le sens autorisé.

Théoriquement, un tel système serait suffisant pour assurer à un véhicule selon l'invention la stabilité à l'arrêt et la liberté d'inclinaison dans le bon sens vis-à-vis de la force centrifuge. En pratique, le comportement du conducteur rend le système un peu plus complexe, du fait qu'il s'incline en anticipant sur l'apparition et le développement de la force centrifuge. De ce fait, il est nécessaire de placer la traverse de blocage sous le contrôle du siège du conducteur. Ce siège est suspendu à un système de biellettes rigoureusement analogue à celui de la traverse de blocage dont le mouvement devient l'image de celui du siège grâce à une transmission par câbles ou par barres tout-à-fait classique.

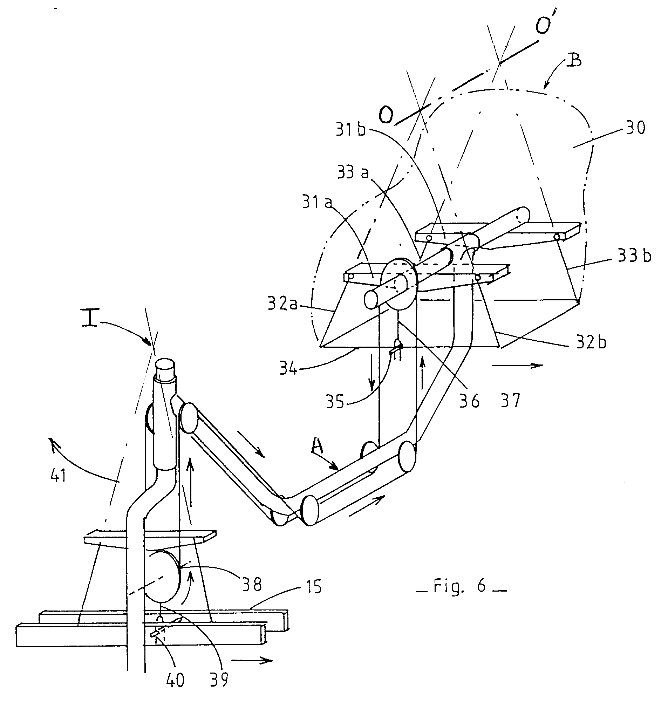

Ainsi, sur la figure 6, le siège 30 est suspendu à des consoles doubles 31a, 31b, par des biellettes 32a, 32b, 33a, 33b. Une barre 34 fixée à la base du siège entraîne par un ergot 35 et une fourchette 36 la rotation d'une poulie 37. Sur cette poulie est frappé un câble qui, s'appuyant sur des poulies de renvoi, commande la rotation de la poulie 38 qui, par la fourchette 39 et l'ergot 40 entraîne pour la traverse de blocage 15 un mouvement identique à celui de la barre 34. De préférence, la fourchette 39 sera élastique pour limiter les efforts dans cette transmission.

Lorsque le conducteur veut s'orienter vers la droite, par exemple (flèche 41), il se penche du côté droit, ce qui a pour effet de déplacer la barre 34 vers sa gauche. La force centrifuge appliquée au siège et au conducteur agit d'ailleurs de même. Dans ces conditions, la traverse de blocage 15 se déplace également vers la gauche, ce qui a pour effet d'autoriser l'inclinaison à droite.

Il est évident que, sans sortir du cadre de l'invention tel que défini par les revendications, des dispositions légèrement différentes de celles décrites précédemment, mais tendant aux mêmes résultats, pourraient être utilisées, par exemple dans la réalisation du système élastique et amortisseur de la suspension et dans la liaison entre la partie secondaire et la traverse de blocage.

## Revendications

1. Véhicule inclinable à chassis en deux parties muni d'un dispositif de stabilisation et comprenant :
- une partie primaire (A) d'appui roulant sur le sol centrée sur un plan médian (P1) normalement vertical et associée à au moins deux trains porteurs, respectivement avant et arrière, l'un des trains portant deux roues écartées (3a, 3b) transversalement et l'autre train portant au moins une troisième roue,
- une partie secondaire (B), qui peut être réduite au siège du conducteur, suspendue à la partie primaire (A) et pouvant s'incliner sous les effets conjugués de la pesanteur et de la force centrifuge, par rapport à la partie primaire en tournant autour d'un axe de suspension (O-O') parallèle au sol et aux plans médians (P1) de la partie primaire (A) et (P2) de la partie secondaire (B),
- un système à parallélogramme déformable associé au train porteur à deux roues et permettant l'inclinaison de la partie primaire (A) et des deux roues (3a, 3b) par rapport au sol , ledit système comprenant deux montants latéraux (8a, 8b) parallèles au plan médian (P1) et articulés à leurs extrémités sur deux balanciers (6, 7) articulés eux-mêmes sur la partie primaire (A), respectivement autour de deux axes superposes (4, 5) placés dans le plan médian (P1) et parallèles au sol, les axes des deux roues (3a, 3b) étant montés respectivement sur lesdits montants (8a, 8b) perpendiculairement au plan médian (P1),
- une traverse (15) suspendue à la partie primaire (A) autour d'un axe de suspension (I) parallèle à l'axe de suspension (O, O') de la partie secondaire (B),
- deux chariots de blocage (18a, 18b) portés respectivement par les deux extrémités de la traverse (15) et montés coulissants le long de celle-ci, chacun par l'intermédiaire d'une liaison glissante (23) permettant le maintien de l'orientation de la traverse par rapport au chariot correspondant (18a, 18b),
- les deux chariots (18a, 18b) étant, d'autre part, montés coulissants, respectivement, sur les deux montants latéraux (8a, 8b) du parallélogramme et munis chacun d'un moyen (24, 25) de blocage de son coulissement le long du montant latéral (8a, 8b) correspondant dans un sens de coulissement correspondant à un éloignement de l'axe de suspension (I) de la traverse (15) par rapport au plan médian (P1) de la partie primaire (A), le coulissement restant libre dans l'autre sens correspondant à un rapprochement dudit axe de suspension (I) vers ledit plan médian (P1),
- l'axe de suspension (I) de la traverse (15) sur la partie primaire (A) étant déterminé virtuellement par un système de deux bielles (16a, 16b) articulées, respectivement, par leurs extrémités inférieures sur la traverse (15), et par leurs extrémités supérieures, sur la partie primaire (A), les points d'articulation inférieurs sur la traverse étant écartés symétriquement de part et d'autre du plan médian de la partie secondaire, et les points d'articulation supérieurs étant écartés symétriquement de part et d'autre du plan médian de la partie primaire et les bielles (16a, 16b) étant orientées de façon à converger vers le haut en un point constituant un centre instantané de rotation et placé sur ledit axe de suspension virtuel (I) de la traverse (15),
- ladite traverse (15) étant solidaire angulairement de la partie secondaire (B) et cette dernière s'inclinant librement avec la partie primaire (A) tant que leurs plans médians (P2, P1) coïncident sensiblement et la partie secondaire (B) prenant appui sur la partie primaire (A) par l'intermédiaire de la traverse (15), des chariots (18a, 18b) et des montants (8a, 8b) du parallélogramme lorsque son plan médian (P2) s'écarte, aux jeux près, du plan médian (P1) de la partie primaire (A) dans le sens où le véhicule tend à tomber.

2. Dispositif de stabilisation selon la revendication 1, caractérisé par le fait que les moyens (24, 25) de blocage du coulissement des chariots interdisent la descente vers le bas, le long du montant latéral correspondant, du chariot (18b) se trouvant du côté vers lequel le plan médian P2 de la partie secondaire B s'écarte de celui P1 de la partie primaire A, et permettent la descente vers le bas du chariot opposé (18a).

3. Dispositif de stabilisation selon la revendication 1, caractérisé par le fait que les moyens (24, 25) de blocage du coulissement des chariots interdisent la remontée vers le haut le long du montant latéral correspondant, du chariot (18a) se trouvant du côté oppose à celui vers lequel le plan médian P2 de la partie secondaire B s'écarte de celui P1 de la partie primaire A et permettent la montée vers le haut du chariot opposé (18b).

4. Dispositif de stabilisation selon l'une des revendications 1 à 3, caractérisé par le fait que les deux bielles (16) de suspension de la traverse (15) sont articulées à leur partie supérieure respectivement sur deux consoles opposées (17) s'écartant de part et d'autre d'un montant central solidaire de la partie primaire A et placé dans le plan médian P1 de celle-ci.

5. Dispositif de stabilisation selon l'une des revendications 1 à 4, caractérisé par le fait que la traverse (15) est suspendue parla les bielles (16) à la partie primaire A indépendamment de partie secondaire B et que celle-ci est suspendue à la partie primaire A par au moins un système de deux bielles (32, 33) orientées de la même façon que les bielles (16) de suspension de la traverse (15), celle-ci étant reliée à la partie secondaire B par un système de transmission d'angle de telle sorte que la traverse (15) constitue une image de la partie secondaires B suivant exactement les mouvements angulaires de celle-ci par rapport à la partie primaire.

6. Dispositif de stabilisation selon la revendication 5, caractérisé par le fait que, au moins le siège (30) du conducteur est suspendu à la partie primaire A par deux paires de bielles (32, 33) disposées dans deux plans parallèles orthogonaux au plan médian de la partie primaire A, les bielles (32a, 32b) (33a, 33b) de chaque paire étant articulées par leurs extrémités inférieures sur le siège (30) en deux points écartés symétriquement de part et d'autre du plan médian de celui-ci et, à leurs extrémités supérieures, sur la partie primaire A, en deux points écartés symétriquement de part et d'autre du plan médian P1 de celle-ci et d'une distance inférieure à l'écartement des points d'articulation inférieurs de telle sorte que les deux paires de bielles (32, 33) convergent vers le haut sur un axe (O, O') constituant un axe de suspension virtuel dudit siège (30) sur la partie primaire (A), la traverse étant suspendue à la partie primaire par des bielles (16a, 16b) orientées de la même façon et reliées au siège (30) par système (35-38) de transmission angulaire sans jeu de façon à reproduire exactement les mouvements du siège (30).

7. Dispositif de stabilisation selon l'une des revendications précédentes, caractérise par le fait que le train porteur auquel est associé le système à parallélogramme déformable (6, 7, 8) est le train avant directeur (3a, 3b).

8. Dispositif de stabilisation selon l'une des revendications 1 à 4, caractérisé par le fait que la traverse (15) est fixée rigidement sur le siège (30) du conducteur, ce dernier étant suspendu à la partie primaire par deux systèmes de bielles (32, 33) convergeant sur un axe de suspension virtuel (O, O'), et que le train porteur auquel est associé le système à parallélogramme déformable est le train arrière, ou un train porteur intermédiaire à deux roues, interposé entre un train avant et un train arrière à une seule roue.

## Claims

1. Inclinable vehicule with a chassis having two parts provided with a stabilization device and comprising:
- a primary part (A) which rests on the ground centred on a normally vertical mid plane (P₁), and associated with at least two bearing axle assemblies, respectively front and rear, one said bearing axle assembly carrying two transversaly interspaced wheels (3a, 3b) and the other at least a third wheel,
- a secondary part (B), which can consist solely of the driver's seat, which is suspended from the primary part (A) and which under the combined affects of gravitational and centrifugal forces, is able to incline relative to the primary part by turning about a suspension axis (O-O') parallel to the ground and mid planes (P₁) of the primary part (A) and (P₂) of the secondary part (B),
- a deformable parallelogram system associated with the two-wheel bearing axle assembly, allowing the primary part (A) and the two wheels (3a,3b) to incline relative to the ground, said system comprising two vertical side bars (8a,8b) parallel to the mid plane (P₁), the ends of said bars being hinged with two equalizers (6, 7) which in turn pivot respectively around two superposed axles (4,5) on the primary part (A) located in the mid plane (P₁) and parallel to the ground, the axles of the two wheels (3a, 3b) being respectively mounted on said vertical side bars (8a, 8b) perpendicularly to the mid plane (P₁).
- a cross piece (15) which is suspended from the primary part (A) around a suspension axis (I) parallel to the suspension axis (O,O') of the secondary part (B),
- two blocking carriages (18a, 18b) held respectively by the two ends of the cross piece (15) and slidingly mounted along said cross piece, each by means of a slidings link (23) allowing to maintain the cross piece orientation with respect to the corresponding carriage (18a, 18b),
- the two carriages (18a, 18b) being, moreover, slidingly mounted respectively onto the two vertical side bars (8a, 8b) of the parallelogram and each provided with a blocking means (24, 25) of the sliding thereof along the corresponding vertical side bar (8a, 8b) in a corresponding sliding direction away from the suspension axis (I) of the cross piece (15) with respect to the mid plane (P₁) of the primary part (A), the sliding being free in the other direction corresponding to a moving towards the said mid plane (P₁) of the suspension axis (I),
- the suspension axis (I) of the cross piece (15) onto the primary part (A) being virtually determinated by a two-rod system (16a, 16b) hinged respectively by the lower ends thereof onto the cross piece (15) and by the upper ends thereof onto the primary part (A), the lower hinge points onto the cross piece being symmetrically spaced either side of the mid plane of the secondary part and the upper hinge points being symmetrically spaced either side of the mid plane of the primary part and the rods (16a, 16b) being oriented in order to converge upwardly onto a point constituting an instantaneous rotating center and located onto the virtual suspension axis (I) of the cross piece (15),
- said cross piece (15) being angularly integral with the secondary part (B) and said latter being inclined freely with the primary part (A) when the mid-planes thereof (P₂,P₁) are subtantially in coincidence and the secondary part (B) bears against the primary part (A) via the cross piece (15), the carriages (18a, 18b) and the vertical side bars (8a, 8b) of the parallelogram when the mid plane thereof (P₂) is spaced away, considering the clearances, from the mid plane (P₁) of the primary part (A) in the direction according to which the vehicule is prone to fall.

2. Stabilization device according to claim 1, characterized in that the means (24,25) for locking the sliding of the carriages forbids the downward movement, along the corresponding vertical side bar, of the carriage (18b) located on the side towards which the mid plane (P₂) of the secondary part (B) moves away from the mid plane (P₁) of the primary part (A), and allows the downward movement of the opposite carriage (18a).

3. Stabilization device according to claim 1, characterized in that the means (24,25) for locking the sliding of the carriages forbids the upward movement, along the corresponding vertical side bar, of the carriage (18a) located on the side opposite the one towards which the mid plane (P₂) of the secondary part (B) moves away from the mid plane (P₁) of the primary part (A), and allows the upward movement of the opposite carriage (18b).

4. Stabilization device according to one of claims 1 to 3, characterized in that the two rods (16) from which the cross piece (15) is suspended are respectively hinged at their upper part to two opposed brackets (17) which stand out from either side of a central vertical element which is integral with the primary part (A) and located in its mid plane (P₁).

5. Stalilization device according to one of claims 1 to 4, characterized in that the cross piece (15) is suspended by rods (16) from the primary part (A) independent of the secondary part (B) and in that the secondary part is suspended from the primary part (A) by at least one two-rod system (32,33) oriented in the same way as the rods (16) from which the cross piece (15) is suspended, said cross piece being linked to the secondary part (B) by an angle transmission system in such a way that the cross piece (15) constitutes an image of the secondary part (B) faithfully following the angular movements of said secondary part relative to the primary part.

6. Stabilization device according to claim 5, characterized in that at least the driver's seat (30) is suspended from the primary part (A) by two pairs of rods (32,33) arranged in two parallel planes at right angles to the mid plane of the primary part (A), the rods (32a,32b) (33a, 33b) of each pair being hinged at their lower ends with the seat (30) at two points symmetrically spaced either side of the mid plane of said seat, and at their upper ends, with the primary part (A), at two points symmetrically spaced either side of the mid plane (P₁) of said primary part and at a distance that is less than the spacing of the lower hinge points in such a way that the two pairs of rods (32,33) upwardly converge on an axis (0,0') constituting a virtual suspension axis of the said seat (30) on the primary part (A), the cross piece being suspended from the primary part by rods (16a, 16b) orientated in the same way and linked to the seat (30) by an angular transmission system (35, 38) without play so as to faithfully reproduce the movements of the seat (30).

7. Stabilization device according to one of the preceding claims, characterized in that the bearing axle assembly with which the deformable parallelogram system (6,7,8) is associated is the front steering bearing axle assembly (3a, 3b).

8. Stabilization device according to one of claims 1 to 4, characterized in that the cross piece (15) is rigidly fixed to the driver's seat (30), said seat being suspended from the primary part by two systems of rods (32,33) converging on a virtual suspension axis (0,0'), and in that the bearing axle assembly with which the deformable parallelogram system is associated is the rear wheel set, or an intermediate two-wheel bearing axle assembly, interposed between a front wheel set and a single-wheel rear wheel set.

## Patentansprüche

1. Neigbares Fahrzeug mit zweiteiligem Chassis und einer Stabilisierungvorrichtung, bestehend aus :
- einem primären auf dem Boden fahrenden Stützteil (A), das auf eine normal senkrechte Mittelebene (P1) zentriert ist und dem mindestens zwei, ein vorderes bzw. ein hinteres, Laufgestelle zugeordnet sind, wobei ein Laufgestell zwei in Querrichtung im Abstand angeordnete Räder (3a, 3b) und das andere Laufgestell mindestens ein drittes Rad trägt,
- einem auf den Fahrersitz beschränkbares und am Primärteil (A) aufgehängtes Sekundärteil (B), das unter den vereinten Wirkungen der Schwere und der Zentrifugalkraft gegenüber dem Primärteil durch Drehen um eine zum Boden und zu den Mittelebenen (P1) des Primärteils (A) und (P2) des Sekundärteils (B) parallele Aufhängungsachse (O-O') neigbar ist,
- einem ein verformbares Parallelogramm aufweisenden System, das dem Zweiradlaufgestell zugeordnet ist und die Neigung des Primärteils (A) sowie der beiden Räder (3a, 3b) zum Boden ermöglicht, wobei dieses System zwei zur Mittelebene (P1) parallele Seitenständer (8a, 8b) aufweist, die mit ihren Enden an zwei Schwingen (6, 7) angelenkt sind, die ihrerseits an dem Primärteil (A) jeweils um zwei übereinanderliegenden, in der Mittelebene (P1) angeordneten und zum Boden parallelen Achsen (4, 5) gelenkig montiert sind, wobei die Achsen der beiden Räder (3a, 3b) senkrecht zur Mittelebene (P1) jeweils an diesen Stândern (8a, 8b) befestigt sind,
- einer um eine zur Aufhängungsachse (O-O') des Sekundärteils (B) parallelen Auhängungsachse (I) an dem Primärteil (A) aufgehängten Traverse (15),
- zwei an den beiden Enden der Traverse (15) abgestützten und entlang derselben jeweils über eine Gleitverbindung (23) gleitend montierten Sperrschlitten (18a, 18b), wodurch die Beibehaltung der Traverseausrichtung zum entsprechenden Schlitten (18a, 18b) gewährleistet wird,
- wobei anderseits die beiden Schlitten (18a, 18b) jeweils auf den beiden Seitenständern (8a, 8b) des Parallelogramms gleitend montiert sind und jeder ein Mittel (24, 25) zum Blockieren seiner Gleitbewegung entlang des entsprechenden Seitenständers (8a, 8b) in einer Gleitrichtung aufweist, die einer Entfernung der Aufhängungsachse (I) der Traverse (1) von der Mittelebene (P1) des Primärteils (A) entspricht, und wobei die Gleitbewegung in die andere einer Annäherung dieser Aufhängungsachse (I) zu dieser Mittelebene (P1) entsprechenden Richtung frei ist,
- wobei die Aufhängungsachse (I) der Traverse (15) auf dem Primärteil (A) über ein System mit zwei Lenkern (16a, 16b) virtuell bestimmt wird, die jeweils über ihre oberen Enden an der Traverse (15) und über ihre unteren Enden an dem Primärteil (A) angelenkt sind, und wobei die unteren Gelenkpunkte auf der Traverse beiderseits der Mittelebene des Sekundärteils symmetrisch im Abstand angeordnet sind, und die oberen Gelenkpunkte beiderseits der Mittelebene des Primärteils symmetrisch im Abstand angeordnet sind und die Lenker (16a, 16b) derart ausgerichtet sind, dass sie nach oben an einem den momentanen Drehmittelpunkt bildenden Punkt konvergieren, der auf dieser virtuellen Aufhängungsachse (I) der Traverse (15) liegt.
- wobei diese Traverse (15) winkelartig mit dem Sekundärteil (B) fest verbunden ist und sich das letztere mit dem Primärtteil (A) frei neigt solange deren Mittelebenen (P2, P1) im wesentlichen zusammenfallen und das Sekundärteil (B) sich über die Traverse (15), die Schlitten (18a, 18b) und die Ständer (8a, 8b) des Parallelogramms auf dem Primärteil (A) abstützt, wenn sich dessen Mittelebene (P2) von der Mittelebene (P1) des Primärteils (A) in die Richtung entfernt, in welcher das Fahrzeug tendiert zu kippen.

2. Stabilisierungsvorrichtung nach Anspruch 1, dadurch gekennzeichnet, dass die Sperrmittel (24, 25) der Schlitten-Gleitbewegung das Absenken nach unten entlang des entsprechenden Seitenständers des Schlittens (18b) untersagen, der sich auf der Seite befindet, in deren Richtung die Mittelebene (P2) des Sekundärteils (B) sich von derjenigen (P1) des Prmärteils (A) entfernt und das Absenken nach unten des gegenüberliegenden Schlittens (18a) ermöglichen.

3. Stabilisierungsvorrichtung nach Anspruch 1, dadurch gekennzeichnet, dass die Sperrmittel (24, 25) der Schlitten-Gleitbewegung das Hochfahren nach oben entlang des entsprechenden Seitenständers des Schlittens (18a) untersagen, der sich auf der entgegengesetzten Seite befindet, in deren Richtung die Mittelebene (P2) des Sekundärteils (B) sich von derjenigen (P1) des Primärteils (A) entfernt, und das Hochfahren nach oben des entgegengesetzten Schlittens (18b) ermöglichen.

4. Stabilisierungsvorrichtung nach einem der Ansprüche 1 bis 3, dadurch gekennzeichnet, dass die beiden Aufhängungslenker (16) der Traverse (15) mit deren Oberteil jeweils an zwei entgegengesetzte Konsolen (17) angelenkt sind, die beiderseits eines mit dem Primärteil (A) fest verbundenen und in der Mittelebene (P1) des letzteren angeordneten zentralen Ständers erstrecken.

5. Stabilisierungvorrichtung nach einem der Ansprüche 1 bis 4, dadurch gekennzeichnet, dass die Traverse (15) unabhängig von dem Sekundärteil (B) über die Lenker (16) an dem Primärteil (A) aufgehängt ist, und dass diese an dem Primärteil (A) über mindestens ein System mit zwei Lenker (32, 33) aufgehängt ist, deren Ausrichtung derjenigen der Aufhängungslenker (16) der Traverse (15) entspricht, wobei diese mit dem Sekundärteil (B) über ein Winkelübertragungssystem derart verbunden ist, dass die Traverse (15) eine Abbildung des Sekundärteils (B) ist, welche genau den Winkelbewegungen desselben zum Primärteil folgt.

6. Stabilisierungsvorrichtung nach Anspruch 5, dadurch gekennzeichnet, dass mindestens der Fahrersitz (30) an dem Primärteil (A) über zwei Lenkerpaare (32, 33) aufgehängt ist, die in zwei orthogonalen zur Mittelebene des Primärteils (A) parallelen Ebenen angeordnet sind, wobei die Lenker (32a, 32b) (33a, 33b) von jedem Paar über deren unteren Enden an dem Sitz (30) an zwei symmetrisch beiderseits der Mittelebene desselben im Abstand voneinander angeordneten Punkte angelenkt sind, und mit ihren oberen Enden an dem Primärteil (A) an zwei beiderseits der Mittelebene (P1) desselben symmetrisch im Abstand voneinander angeordneten Punkte in einer Entfernung, die kleiner als der Abstand der unteren Gelenkpunkte ist, derart angelenkt sind, dass die beiden Lenkerpaare (32, 33) nach oben auf eine Achse (O, O') konvergieren, die eine virtuelle Aufhängungsachse dieses Sitzes (30) auf dem Primärteil (A) bildet, wobei die Traverse an dem Primärteil über zwei gleichartig ausgerichtete Lenker (16a, 16b) aufgehängt ist, die mit dem Sitz (30) über ein spielfreies Winkelübertragungssystem derart verbunden sind, dass eine genaue Wiedergabe der Bewegungen des Sitzes (30) erfolgt.

7. Stabilisierungsvorrichtung nach einem der vorangehenden Ansprüche, dadurch gekennzeichnet, dass das Laufgestell, dem das System mit dem verformbaren Parallelogramm (6, 7, 8) zugeordnet ist, das vordere Leitgestell (3a, 3b) ist,

8. Stabilisierungsvorrichtung nach einem der Ansprüche 1 bis 4, dadurch gekennzeichnet, dass die Traverse (15) starr an dem Fahrersitz (30) befestigt ist, wobei der letztere an dem Primärteil über zwei Lenkersysteme (32, 33), die an einer virtuellen Aufhängungsachse (0, 0') konvergieren, und dass das Laufgestell, dem das System mit dem verformbaren Parallelogramm zugeordnet ist, das hintere Laufgestell, oder ein Zwischenlaufgestell mit zwei Rädern ist, das zwischen einem vorderen Laufgestell und einem hinteren Einradlaufgestell angeordnet ist.
